# DEMANDE DE BREVET EUROPEEN

(11) **EP 1 093 987 A2**
(43) Date de publication de la demande: **25.04.2001**
(21) Numéro de dépôt: 00402905.4
(22) Date de dépôt: 19.10.2000
(51) Int. Cl.: B62B 3/02, B62B 3/18, B62B 3/14

(54) **Chariot modulaire**

(30) Priorité: 19.10.1999 FR 9913039
(71) Demandeur: MLI (S.A.R.L.), 78306 Poissy Cedex (FR)
(72) Inventeur: Losego, Martine, 78260 Acheres (FR)
(74) Mandataire: Breese, Pierre

(57) **Abrégé**

La présente invention concerne un chariot destiné au transport d'articles dans un magasin, du type présentant un châssis (1) réalisé par des tiges (3) pliées et soudées pour former par une embase ouverte vers l'arrière et des flancs latéraux convergeant vers l'avant pour permettre un encastrement de chariots consécutifs, l'embase étant muni à chaque angle de roulettes, l'embase étant prolongée vers le haut par des éléments de liaison avec un réceptacle (2), caractérisé en ce que la liaison entre le réceptacle (2) et le châssis (1) est réalisée d'une part par la coopération entre l'extrémité (9) des tiges latérales (10) formant les arêtes latérales inférieures du réceptacle (2), et au moins deux cavaliers (8) disposés sur lesdits éléments de liaison, lesdits cavaliers (8) étant destinés à former un logement pour recevoir lesdites extrémités (9) des tiges latérales (10) et d'autre part par des moyens de verrouillages prévus d'une part sur le réceptacle (2) et d'autre part sur le châssis (1).

## Description

La présente invention concerne le domaine des chariots destinés au transport d'articles dans un magasin. De tels chariots sont généralement constitués par un châssis réalisé par des tiges pliées et soudées pour former une embase ouverte vers l'arrière et des flancs latéraux convergeant vers l'avant pour permettre un encastrement de chariots consécutifs. L'embase est munie à chaque angle de roulettes et est prolongée vers le haut par des éléments de liaison avec un réceptacle ou panier réalisé par des fils soudés sur une armature en tiges métalliques pliées. Ces chariots sont connus sous le nom commercial de « caddy ». On connaît également des versions motorisées comportant un bloc moteur fixé sur l'embase du chariot. Lorsque le panier de tels chariots est endommagé, l'ensemble du chariot doit être remplacé.

L'art antérieur connaît notamment la demande de brevet européen N° EP 895 921 qui porte sur un chariot présentant un châssis muni de moyens permettant de désolidariser le réceptacle.

Selon ce document, la liaison entre le réceptacle et le châssis est réalisée par la coopération entre le bord inférieur arrière du réceptacle et des crochets, formant des moyens de retenus partiels, transversaux, disposés à l'extrémité des tiges latérales de fixation.

Les inconvénients majeurs de ce dispositif résident dans le fait que le système est complexe et dans le fait pour enlever le réceptacle, il faut lui imprimer une rotation d'au moins 45 ° autour du bord inférieur arrière, en soulevant le bord inférieur avant. Ce mouvement est difficile à opérer pour une personne seule.

Le but de la présente invention est de proposer un chariot modulaire permettant le remplacement aisé du réceptacle ou panier, tout en conservant le châssis. L'avantage majeur de la présente invention est bien sûr de permettre le remplacement d'un panier endommagé, mais aussi de substituer facilement au panier un autre réceptacle, par exemple un plateau, à l'aide d'un système simple, peu onéreux et faisant appel à un minimum de pièces.

En outre, l'embase est réalisée de telle sorte que la distance entre les éléments de liaison avant et arrière du châssis avec le réceptacle peut varier.

A cet effet, l'invention concerne selon son acception générale un chariot destiné au transport d'articles dans un magasin conforme à la revendication 1.

Ce chariot est du type présentant un châssis réalisé par des tiges pliées et soudées pour former une embase ouverte vers l'arrière et des flancs latéraux convergeant vers l'avant pour permettre un encastrement de chariots consécutifs, l'embase étant munie à chaque angle de roulettes, l'embase étant prolongée vers le haut par des éléments de liaison avec un réceptacle. Ce chariot est remarquable en ce que la liaison entre le réceptacle et le châssis est réalisée d'une part par la coopération entre l'extrémité des tiges inférieures formant les renforts inférieurs du réceptacle, et au moins deux cavaliers destinés à former un logement pour recevoir lesdites extrémités des tiges inférieures et d'autre part par des moyens de verrouillage prévus d'une part sur le réceptacle et d'autre part sur le châssis.

La fixation du réceptacle sur le châssis est opérée d'une part par la coopération entre les cavaliers situés sur les éléments de liaison et les extrémités des tiges latérales et d'autre part par la coopération entre les moyens de verrouillage prévus sur le réceptacle et sur le châssis.

Ainsi, pour enlever le réceptacle du châssis, il suffit de débloquer les moyens de verrouillage, de soulever le réceptacle et de le tirer selon la direction longitudinale, vers l'avant.

Avantageusement, l'embase présente des éléments de liaison arrière formés par une tige coudée formée en U renversé soudée sur l'arrière de l'embase et s'étendant avec une partie oblique en direction du coin inférieur arrière du réceptacle, la partie transversale de la tige étant munie de deux au plus cavaliers soudés sur la tige.

L'embase présente des éléments de liaison avant formés par une tige coudée formée en U renversé soudée sur les flancs de l'embase et s'étendant sensiblement verticalement jusqu'au réceptacle, la partie transversale de la dite tige portant des moyens de verrouillage pour maintenir le réceptacle.

De préférence, les moyens de verrouillage sont formés par des platines solidaires de la partie transversale de la tige formant les éléments de liaison avant et venant s'appuyer contre des platines solidaires des renforts inférieurs du réceptacle, les deux platines étant percées chacune par un trou permettant une solidarisation à l'aide d'un organe venant traverser les deux trous alignés.

Selon un premier mode de réalisation, les deux platines sont verrouillées par un boulon.

Selon un deuxième mode de réalisation, les deux platines sont verrouillées par un rivet.

Selon un troisième mode de réalisation, les deux platines sont verrouillées par une agrafe formée par une tige rigide repliée pour former une partie avant sensiblement en forme de « Z » et une partie arrière sensiblement en forme de crosse, la partie avant étant aptes à traverser les trous formés dans chacune des platines et la partie arrière étant aptes à s'accrocher sur l'une des platines pour bloquer l'agrafe.

Dans un autre mode de réalisation, les moyens de verrouillage sont formés par des crochets solidaires de la partie inférieure du réceptacle et ouverts vers l'arrière du réceptacle.

Le châssis présente deux éléments latéraux formés chacun par une tige coudée en forme d'épingle à cheveux et comporte une tige coudée soudée sur ladite tige pour délimiter un espace pour le passage de l'élément de fixation d'une roulette.

Dans un autre mode de réalisation, les éléments de liaison arrière présentent à chaque extrémité inférieure un support de calage comportant un oeil de positionnement d'une roulette, ledit support de calage comportant en outre au moins un étrier pour le passage et la fixation de tronçons du châssis.

Ledit support de calage comporte en outre de préférence une tige d'espacement chargée de maintenir le tronçon parallèle à l'oeil de positionnement.

La distance entre les éléments de liaison avant et les éléments de liaison arrière peut ainsi être ajustée par déplacement du support de calage le long des tronçons du châssis.

Pour un blocage ferme des extrémités arrière dans les cavaliers, les extrémités arrières sont munies de moyens de blocage constitués par des rondelles à bords intérieurs crantés, lesdits bords intérieurs crantés étant destinés à venir coopérer avec des gorges prévues sur les extrémités arrière des tiges latérales du réceptacle.

Selon un mode de réalisation particulier le chariot comporte un réceptacle interchangeable constitué par un panier ou un plateau.

L'invention sera mieux comprise à la lecture de la description de plusieurs exemples de réalisation non limitatifs qui suivent, se référant aux dessins annexés où :
- La figure 1 représente une vue partielle de côté d'un chariot selon l'invention ;
- La figure 2 représente une vue de détail de l'assemblage du panier et du châssis ;

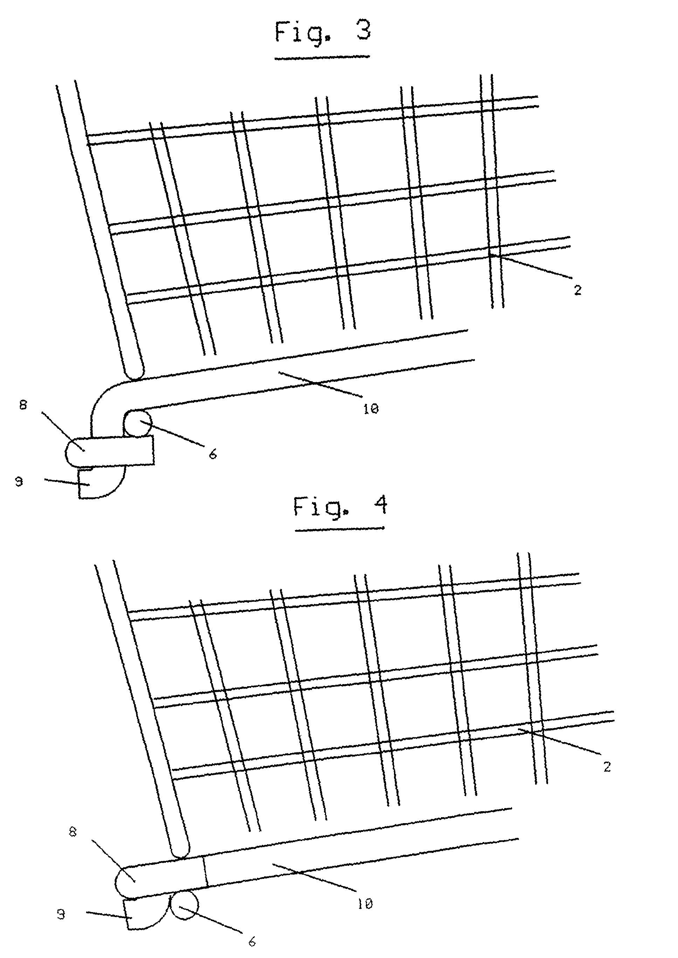

- Les figures 3 et 4 représentent une vue partielle de côté de variante de réalisation d'un chariot selon l'invention ;
- Les figures 5 à 9 représentent des vues de détail de l'assemblage du châssis et du panier ;
- Les figures 10 à 14 représentent une vue de détail des moyens de verrouillage ;

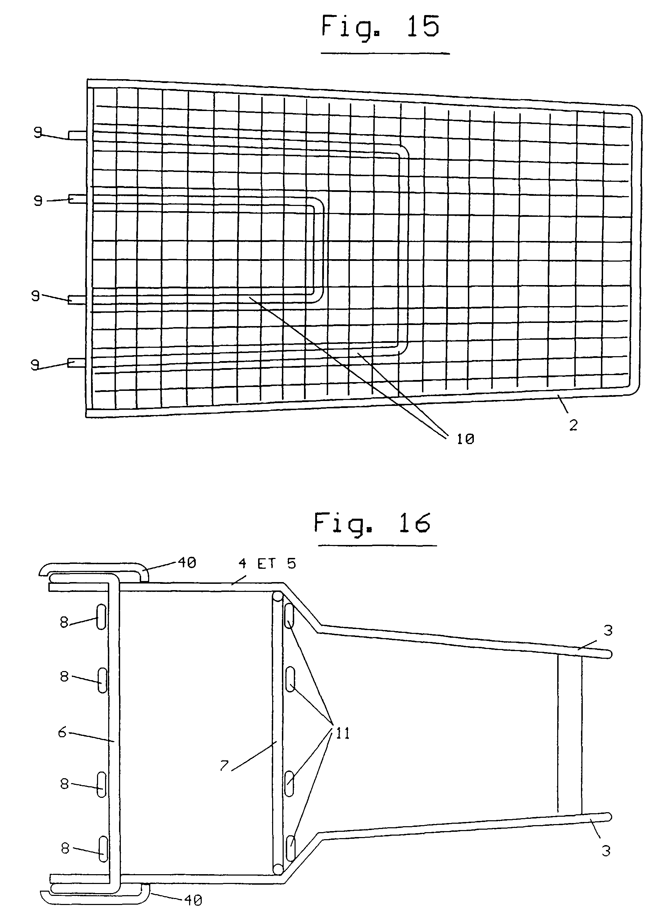

- Les figures 15 et 16 représentent respectivement une vue de dessus du réceptacle avec ses renforts prolongés par les moyens d'assemblage solidaires du réceptacle et une vue de dessus du châssis comportant les moyens d'assemblage et de fixation solidaires du châssis :
- La figure 17 représente une vue de côté d'un mode de fixation des roulettes sur le chariot ;
- La figure 18 représente une vue de côté d'un mode d'assemblage des éléments de liaison avant et arrière ;
- La figure 19 représente une vue de côté d'un étrier utilisé dans le mode d'assemblage de la figure 18 ; et
- La figure 20 représente une vue de face arrière détaillée du mode d'assemblage de la figure 18.

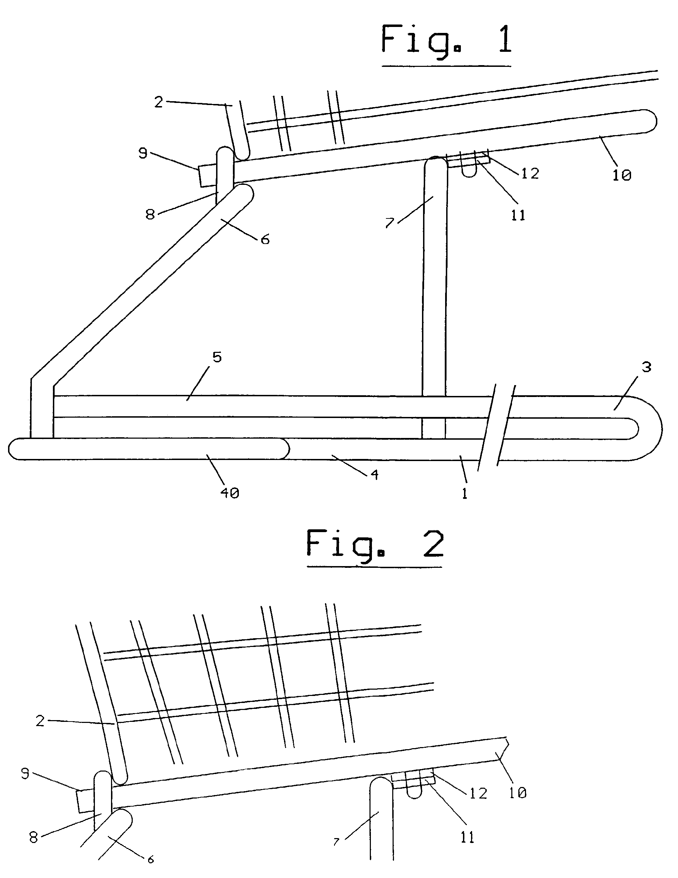

La figure 1 représente une vue de côté d'un chariot selon l'invention constitué par un châssis (1) et un réceptacle (2) amovible, formé par un réceptacle.

Le châssis (1) est constitué par un assemblage de tige pliée ouvert à l'arrière formant une embase (1).

Les flans latéraux sont constitués chacun par une tige repliée en épingle à cheveux (3) présentant de tronçons (4 et 5) parallèles superposés verticalement. Le châssis présente une tige coudée formée en U renversé (6) dont les extrémités sont soudées sur l'extrémité arrière des deux tronçons (4 et 5).

Cette tige (6) s'élève en oblique vers l'avant du chariot avec un angle d'environ 45° par rapport à la verticale. Une deuxième tige (7) coudée formée en U renversé s'étend verticalement. Elle est soudée au milieu de l'embase.

La tige (6) présente dans sa partie transversale des cavaliers (8) en forme de U formant un oeil pour le passage de l'extrémité arrière (9) des tiges latérales (10) formant renforts inférieurs du réceptacle (2).

Ces cavaliers sont soudés sur la partie transversale de la tige (6).

La tige (7) présente dans sa partie transversale des platines (11) venant au contact avec les platines (12) solidaires des tiges latérales (10) formant renforts inférieurs du réceptacle (2).

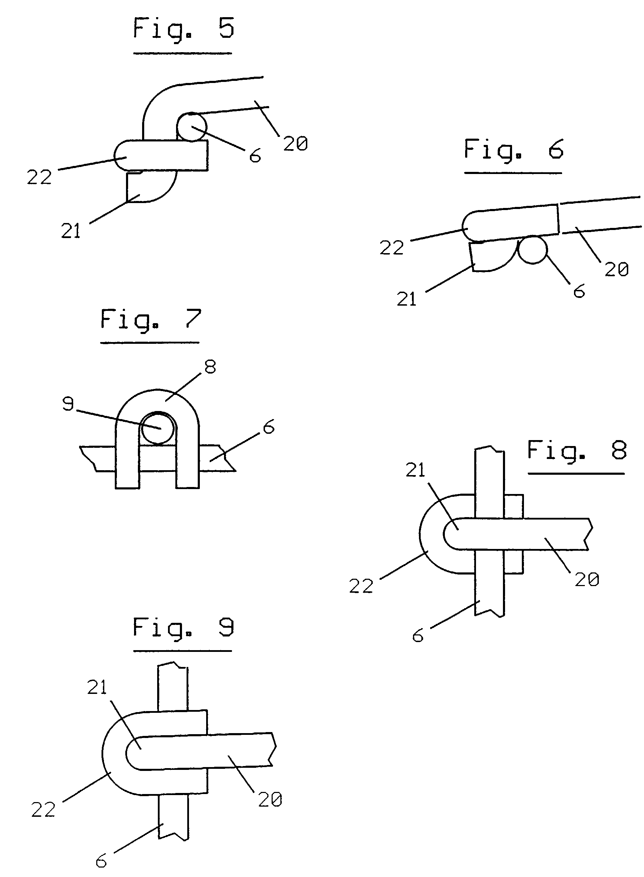

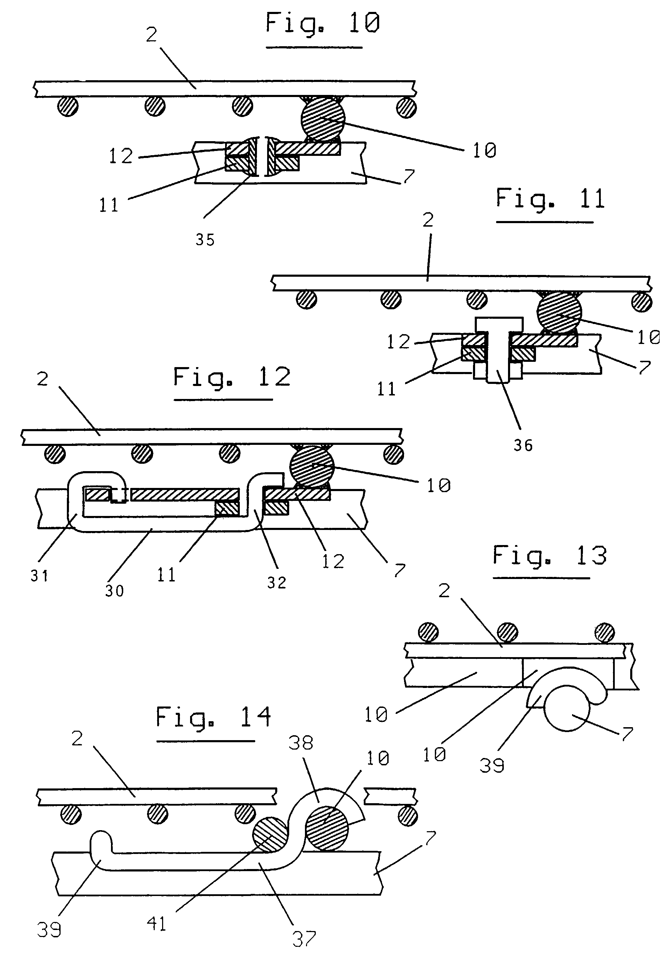

Les figures 5 et 6 et les figures 8 et 9 correspondent respectivement à des vues latérales et de dessus de l'assemblage du réceptacle (2) avec le châssis (1) ; la figure 7 représente une variante vue de derrière ; les figures 10,11,12, et 14 représentent des vues de face des moyens de fixation ; la figure 13 représente une vue de profil des moyens de fixation représentés en figure 14.

La figure 5 représente une variante de réalisation dans laquelle les tiges (20) formant renforts inférieurs du réceptacle (2) présentent une extrémité (21) sensiblement en forme de « Z » venant s'encastrer dans un cavalier (22) formant un oeil horizontal solidaire de la tige (6).

Le verrouillage du réceptacle (2) sur le châssis (1) se fait par l'intermédiaire d'un organe traversant le trou prévu dans les deux platines (11, 12) ou par un ou plusieurs crochets (50).

Le verrouillage entre les platines (11, 12) peut prendre différentes formes représentées aux figures 10 à 14.

La figure 12 représente une première solution dans laquelle le verrouillage est effectué à l'aide d'une agrafe (30). La partie avant (32) de l'agrafe (30) en forme de « S » traverse les trous des platines (11,12) . La partie arrière de l'agrafe (30) présente une forme de crosse (31). L'extrémité avant (32) de l'agrafe (30) est engagée dans les deux trous puis l'agrafe est tournée et finalement verrouillée à l'aide de la crosse (31).

La figure 10 représente une variante de réalisation dans laquelle un rivet (35) traverse les deux trous formés dans les platines (11 et 12).

La figure 11 représente une variante de réalisation dans laquelle un boulon (36) traverse les deux trous formés dans les platines (11 et 12)

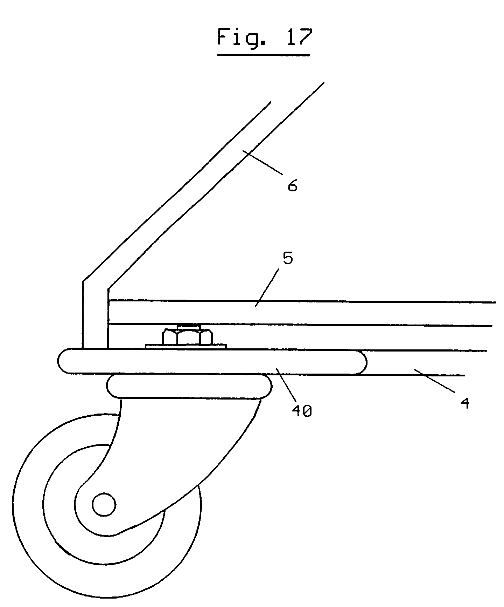

La figure 17 représente une vue en détail de la fixation des roulettes. La tige (4) de l'embase du châssis et solidaire d'une tige coudée (40) soudée pour délimiter un espace dans lequel est introduit le support de la roulette, orientable ou non.

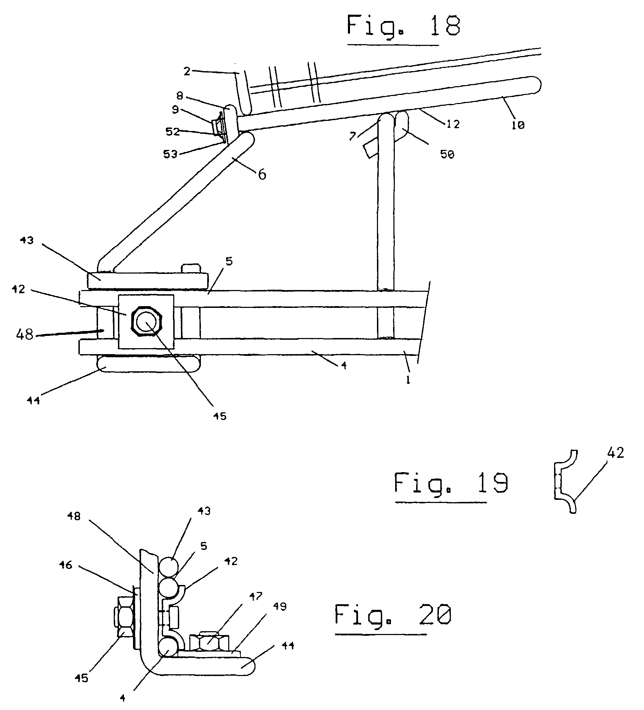

Dans un autre mode d'assemblage des éléments de liaison arrière illustré figures 18 et 20, la tige (6) présente à chaque extrémité inférieure un support de calage (48) comportant un oeil de positionnement (44) d'une roulette. Ledit support de calage (48) comporte en outre au moins un étrier (42), illustré figure 19, pour le passage de tronçons (4, 5) du châssis (1) par glissement entre la tige d'espacement (43) et l'oeil de positionnement (44) et pour leur fixation au support de calage (48).

Ce système permet ainsi de caler précisément la tige 7 par rapport à la tige (6) et permet en outre de faire varier la distance entre ces tiges.

L'étrier (42) et l'étrier (46) maintiennent le support de calage (48) bloqué contre les tronçons (4) et (5) au moyen d'un ensemble vis et écrou (45).

Un étrier (49) est prévu pour le maintien du bâti de la roue, pivotante ou non, sur l'oeil de fixation (44) au moyen de la vis généralement présente sur ce bâti et de l'écrou (47) qui vient compléter la fixation.

Les étriers (42, 46 et 49) ont une forme sensiblement similaire à celle représentée en figure 19.

## Revendications

1. Chariot destiné au transport d'articles dans un magasin, du type présentant un châssis (1) réalisé par des tiges pliées et soudées pour former par une embase ouverte vers l'arrière et des flancs latéraux convergeant vers l'avant pour permettre un encastrement de chariots consécutifs, l'embase étant muni à chaque angle de roulettes, l'embase étant prolongée vers le haut par des éléments de liaison avec un réceptacle (2), caractérisé en ce que la liaison entre le réceptacle (2) et le châssis (1) est réalisée d'une part par la coopération entre l'extrémité (9) des tiges latérales (10) formant les arêtes latérales inférieures du réceptacle (2), et au moins deux cavaliers (8) disposés sur lesdits éléments de liaison, lesdits cavaliers (8) étant destinés à former un logement pour recevoir lesdites extrémités (9) des tiges latérales (10) et d'autre part par des moyens de verrouillage prévus d'une part sur le réceptacle (2) et d'autre part sur le châssis (1).

2. Chariot destiné au transport d'articles dans un magasin, selon la revendication 1 caractérisé en ce que l'embase présente des éléments de liaison arrière formés par une tige (6) coudée en forme de U renversé, soudée sur l'arrière de l'embase, et s'étendant avec une partie oblique en direction du coin inférieur arrière du réceptacle (2), la partie transversale de la tige (6) étant muni de deux ou plus cavaliers (8) soudés sur la tige.

3. Chariot destiné au transport d'articles dans un magasin, selon la revendication 1 ou 2 caractérisé en ce que l'embase présente des éléments de liaison avant formés par une tige (7) coudée en forme de U renversé, soudées sur les flancs de l'embase et s'étendant sensiblement verticalement jusqu'au réceptacle (2), la partie transversale de la tige (7) portant des moyens de verrouillage pour maintenir le réceptacle (2).

4. Chariot destiné au transport d'articles dans un magasin, selon la revendication 3 caractérisé en ce que les moyens de verrouillage sont formés par des platines (11) solidaires de la partie transversale de la tige (7) venant s'appuyer contre des platines (12) solidaires de la partie inférieure du réceptacle (2), les deux platines (11, 12) étant percées chacune par un trou permettant une solidarisation à l'aide d'un organe venant traverser les deux trous alignés.

5. Chariot destiné au transport d'articles dans un magasin, selon la revendication 4 caractérisé en ce que les deux platines (11, 12) sont verrouillées par un boulon (36).

6. Chariot destiné au transport d'articles dans un magasin, selon la revendication 4 caractérisé en ce que les deux platines (11, 12) sont verrouillées par un rivet (35).

7. Chariot destiné au transport d'articles dans un magasin, selon la revendication 4 caractérisé en ce que les deux platines (11, 12) sont verrouillées par une agrafe (30) formée par une tige rigide repliée pour former une partie avant (32) sensiblement en forme de « Z » et une partie arrière sensiblement en forme de crosse (31), la partie avant (32) étant apte à traverser les trous formés dans chacune des platines (11, 12), et la partie arrière étant aptes à s'accrocher sur l'une des platines pour bloquer l'agrafe (30).

8. Chariot destiné au transport d'articles dans un magasin, selon la revendication 3 caractérisé en ce que les moyens de verrouillages sont formés par des crochets (50) solidaires de la partie inférieure du réceptacle (2) et ouverts vers l'arrière du réceptacle (2).

9. Chariot destiné au transport d'articles dans un magasin, selon l'une quelconque des revendications 1 à 8 caractérisé en ce que le châssis (1) présente deux éléments latéraux formés par une tige coudée en forme d'épingle à cheveux et comporte une tige coudée (40) soudée sur ladite tige pour délimiter un espace pour le passage de l'élément de fixation d'une roulette.

10. Chariot destiné au transport d'articles dans un magasin, selon l'une quelconque des revendications 1 à 9 caractérisé en ce que les éléments de liaison arrière présentent à chaque extrémité inférieure un support de calage (48) comportant un oeil de positionnement (44) d'une roulette, ledit support de calage (48) comportant en outre au moins un étrier (42) pour le passage et la fixation de tronçons (4, 5) du châssis (1).

11. Chariot destiné au transport d'articles dans un magasin, selon la revendication 10 caractérisé en ce que ledit support de calage (48) comporte en outre une tige d'espacement (43) chargée de maintenir le tronçon (5) parallèle à l'oeil de positionnement (44).

12. Chariot destiné au transport d'articles dans un magasin, selon l'une quelconque des revendications 1 à 11 caractérisé en ces les extrémités arrière (9) sont munies de moyens de blocage constitués par des rondelles (53) à bords intérieurs crantés, lesdits bords intérieurs crantés étant destinés à venir coopérer avec des gorges (52) prévues sur les extrémités arrières (9).

13. Chariot destiné au transport d'articles dans un magasin, selon l'une quelconque des revendications 1 à 12 caractérisé en ce qu'il comporte un réceptacle (2) interchangeable constitué par un panier ou par un plateau.
